# EUROPEAN PATENT APPLICATION

(11) **EP 1 672 820 A2**
(43) Date of publication of application: **21.06.2006**
(21) Application number: 05027297.0
(22) Date of filing: 14.12.2005
(51) Int. Cl.: H04B 10/00, G02B 6/42

(54) **Universal multi-port optical block assembly with configurable optical port**

(30) Priority: 17.12.2004 US 15922
(71) Applicant: Alcatel, 75008 Paris (FR)
(72) Inventor: Ruegg, Eugen H., Cary, NC 27511 (US); Granger, Alain, Raleigh, NC 27615 (US)
(74) Representative: Dreiss, Fuhlendorf, Steimle & Becker

(57) **Abstract**

A multi-port optical block system comprises a multi-port block assembly and an optical-to-electrical conversion apparatus. The multi-port optical block assembly is configured for having a connector of the optical-to-electrical converter apparatus attached thereto. The connector of the optical-to-electrical conversion apparatus is configured for being selectively attached to and detached from the multi-port optical block. The optical-to-electrical conversion apparatus includes a photo diode and signal amplification electronics connected to the photo diode. The photo diode is mounted on the connector of the optical-to-electrical conversion apparatus. The photo diode and said signal amplification electronics are jointly configured for providing optimized signal performance for a prescribed bandwidth specification.

## Description

### FIELD OF THE DISCLOSURE

The disclosures made herein relate generally to fiber optics hardware and, more particularly, to multi-port optical block assemblies.

### BACKGROUND

A conventional wavelength division multiplex (WDM) bi-directional triplexer (i.e., referred to herein as a conventional multi-port optical block assembly) includes a downstream data port (e.g., a baseband digital signal) and a downstream video port (e.g., a video RF signal). The downstream data port and the downstream video port of such a conventional multi-port optical block assembly are each typically implemented with a respective photo diode. The downstream data port typically has a photo diode that is followed by an integrated trans impedance amplifier. The downstream video port typically uses a substantially linear photo diode without an integrated amplifier.

The reason for the downstream video port not having an integrated amplifier comes from the fact that the distortion specifications are very stringent and an integrated amplifier following a photo diode in an optical block assembly is configured for a particular application. More specifically, an amplifier following a photo diode in an optical block assembly is generally tailored to a specific application (e.g., for CATV from about 47 MHz to about 870 MHz) and may not be adequate for other applications. Currently, there are no microchips available for integration with the Photo Diode that would allow for more universal applicability.

In view of this limitation of the amplifier, the situation arises where several specialized amplifier types, which are optimized for a specific respective application (e.g., Satellite Video, GPON, Gig-E PON, 10Gig-E PON etc), are required. In conjunction with this situation, it is preferable that a photo diode be wideband enough to serve all types of applications such that more than one configuration of optical block assembly is not required (i.e., block assemblies having different specification photo diodes). Unfortunately, the fact is that one specification of photo diode will not likely satisfy all needs and also be optimized for each application.

The downstream video port is terminated with a wideband O/E (Optical to Electrical conversion) in the form of a PIN (i.e., positive-intrinsic-negative) photo diode. The PIN photo diode is designed for a certain bandwidth and will not perform well for other bandwidths. For example, higher bandwidths will experience frequency roll-off and lower bandwidths will have more noise than necessary and, possibly, acceptable. Accordingly, conventional WDM multidirectional optical block assemblies require optimized diodes and/or amplifiers for various different applications, resulting in a multitude of different optical block assemblies. It is conceivable that a single conventional optical block assembly could serve a few applications (e.g., GPON and Gig-E PON). However, even with such combining of applications, several different configurations of conventional optical block assemblies would be required to serve the vast array of possible applications.

The various components of conventional multi-port optical block assemblies are assembled in a unitary manner, which are not intended to be re-configurable once assembled. In view of this unitary assembly and limitations associated with opto-electical performance over a broad range of applications, conventional multi-port optical block assemblies exhibit several shortcomings. Therefore, a multi-port optical block assembly that enables shortcomings associated with conventional multi-port optical block assemblies to be overcome would be useful, advantageous and novel.

### SUMMARY OF THE DISCLOSURE

The inventive disclosures made herein provide for multi-port optical block assemblies and systems to be implemented in a manner that overcomes shortcomings associated with conventional multi-port optical block assemblies. Multi-port optical block assemblies and systems in accordance with the inventive disclosures made herein allow light filtered within a multi-port optical block assembly (e.g., light corresponding to an analog receiver port or digital receiver port) to be accessed and utilized external to the multi-port optical block assembly. This externally accessible filtered light permits functionality to be implemented, which from performance, versatility, deployment, cost, inventory and/or maintenance standpoints, advantageously impacts utility of multi-port optical block assemblies and systems in accordance with the inventive disclosures made herein.

In one example of the utility of multi-port optical block assemblies and systems in accordance with the inventive disclosures made herein, an optical-to-electrical converter apparatus (e.g., photo diode and back-end electronics) of a conventional multi-port optical block assembly for at least one receiver port (e.g., a video and/or data port) is omitted. That optical-to-electrical converter apparatus is replaced with a connector attachment structure that is configured for having a connector of an optical-to-electrical converter apparatus detachably attached thereto (e.g., snap-on, screw-on, twist-on, etc). The optical-to-electrical converter apparatus, which may be customized for specific applications, is attached to the connector attachment structure of the multi-port optical block assembly and receives filtered light through such connector attachment structure. For example, a photo diode and back-end electronics of an optical-to-electrical converter apparatus may be customized for specific applications and bandwidth specifications.

The multi-port optical block assembly, however, stays the same for several, if not all, applications. Accordingly, the bandwidth of the receiver port for a multi-port optical block assembly in accordance with the inventive disclosures made herein is now given by the input fiber (e.g., several dozens of GHz) and the optical block assembly is configurable for use in many present and future applications. In this manner, the multi-port optical block assembly is a universal multi-port optical block assembly with a configurable optical port with respect to the different versions of the optical-to-electrical converter apparatus.

A useful advantage of the multi-port optical block assemblies and systems in accordance with the inventive disclosures made herein is that a single configuration of multi-port optical block assembly can serve an extremely wide spectrum of bandwidth and/or PON applications. Nearly any application can be optimized via suitable tailoring of the photo diode and its associated electronic, without having to make undesirable compromises for other applications, future applications and/or future growth. Because optical-to-electrical converter apparatuses in accordance with the inventive disclosures made herein is selectively attachable to and detachable from a multi-port optical block assembly in accordance with the inventive disclosures made herein, they can be readily changed in the future and even in the field. This capability adds flexibility to the network and to the costing structure by only deploying the desired functionality and/or application.

Also, there will be applications in the future of yet unknown character. It is impossible to design optical block assemblies today to accommodate these applications. However, a configurable port in accordance with the inventive disclosures made herein optical port is virtually transparent to any application present or future.

In one embodiment of the inventive disclosures made herein, a body for a multi-port optical block assembly comprises a plurality of fiber optics connector attachment structures. Each one of the fiber optics connector attachment structures is attached to a respective body wall (i.e., wall of the body), is configured for having a connector of an optical signal processing apparatus attached thereto, and has a respective light passage for enabling a light beam to be transmitted therethrough.

In another embodiment of the inventive disclosures made herein, a multi-port optical block assembly comprises a body, a means for filtering a first beam of light and a means for directing a second beam of light. The body includes a fiber optics connector attachment structure configured for having a connector of an optical signal processing apparatus attached thereto and a light passage extending through the fiber optics connector attachment structure. The means for filtering a first beam of light filters such light in a manner that provides the second beam of light, which has a prescribed wavelength characteristic. The means for directing the second beam of light directs the second beam of light into the light passage that extends through the fiber optics connector attachment structure.

In another embodiment of the inventive disclosures made herein, a multi-port optical block system comprises a multi-port optical block assembly and an optical-to-electrical conversion apparatus. The multi-port optical block assembly is configured for having a connector of the optical-to-electrical converter apparatus attached thereto. The optical-to-electrical conversion apparatus includes a connector configured for being selectively attached to and detached from the multi-port optical block assembly.

Turning now to specific aspects of multi-port optical block assemblies and systems in accordance with the inventive disclosures made herein, in at least one embodiment of the inventive disclosures made herein, each one of the fiber optics connector attachment structures includes a respective receptacle extending from a respective exterior body surface (i.e., exterior surface of the body) and the respective light passage of each one of the fiber optics connector attachment structures extends through the respective receptacle.

In at least one embodiment of the inventive disclosures made herein, a second light passage extends generally parallel with the first light passage and a third light passage extends communicatively between the first light passage and the second light passage.

In at least one embodiment of the inventive disclosures made herein, the respective light passage of at least one of the fiber optics connector attachment structures includes a portion having a bore configured for receiving one of an optical fiber ferrule and a light-expanding rod.

In at least one embodiment of the inventive disclosures made herein, one of the fiber optics connector attachment structures includes means for enabling a fiber optics connector to be selectively attached to and detached from the structure.

In at least one embodiment of the inventive disclosures made herein, at least one of an optical fiber ferrule and a light-expanding rod is mounted within the light passage that extends through the fiber optics connector attachment structure.

In at least one embodiment of the inventive disclosures made herein, a lens configured for collimating the second beam of light is mounted between the means for directing and the light passage.

In at least one embodiment of the inventive disclosures made herein, the means for filtering and the means for directing are jointly comprised by a dichroic mirror, whereby the second beam of light is directed by the dichroic mirror into the light passage.

In at least one embodiment of the inventive disclosures made herein, the means for filtering is comprised by a dichroic mirror and the means for directing is jointly comprised by the dichroic mirror and a non-dichroic mirror whereby the second beam of light is directed by the dichroic mirror to the non-dichroic mirror and by the non-dichroic mirror into the light passage.

In at least one embodiment of the inventive disclosures made herein, the optical-to-electronics conversion apparatus includes a photo diode and signal amplification electronics connected to the photo diode, and the photo diode is mounted on the connector of the optical-to-electrical conversion apparatus.

In at least one embodiment of the inventive disclosures made herein, the photo diode and the signal amplification electronics are jointly configured for providing optimized signal performance for a prescribed bandwidth specification.

In at least one embodiment of the inventive disclosures made herein, the optical-to-electrical conversion apparatus includes a lens mounted on the connector and configured for focusing light into a light-receiving portion of the photo diode.

These and other objects and embodiments of the inventive disclosures made herein will become readily apparent upon further review of the following specification and associated drawings.

### BRIEF DESCRIPTION OF THE DRAWINGS

FIG. 1 depicts a multi-port optical block assembly in accordance with a first embodiment of the inventive disclosures made herein.
FIG. 2 is a cross-sectional view taken along the line 2-2 in FIG. 1.
FIG. 3 depicts a multi-port optical block system in accordance with the first embodiment of the inventive disclosures made herein.
FIG. 4. is a cross-sectional view taken along the line 4-4 in FIG. 3.
FIG. 5 depicts a multi-port optical block system in accordance with a second embodiment of the inventive disclosures made herein.
FIG. 6. is a cross-sectional view taken along the line 6-6 in FIG. 5.

### DETAILED DESCRIPTION OF THE DRAWINGS

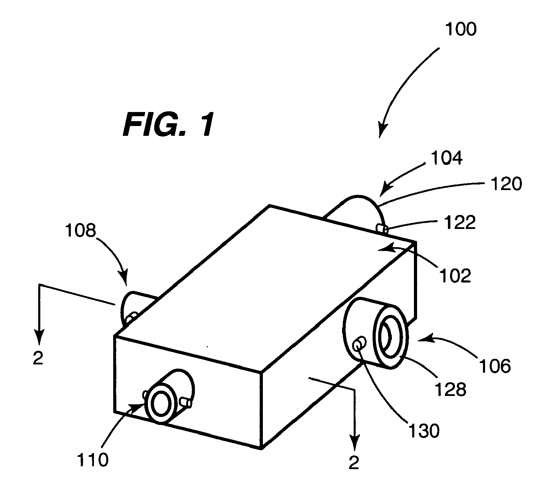

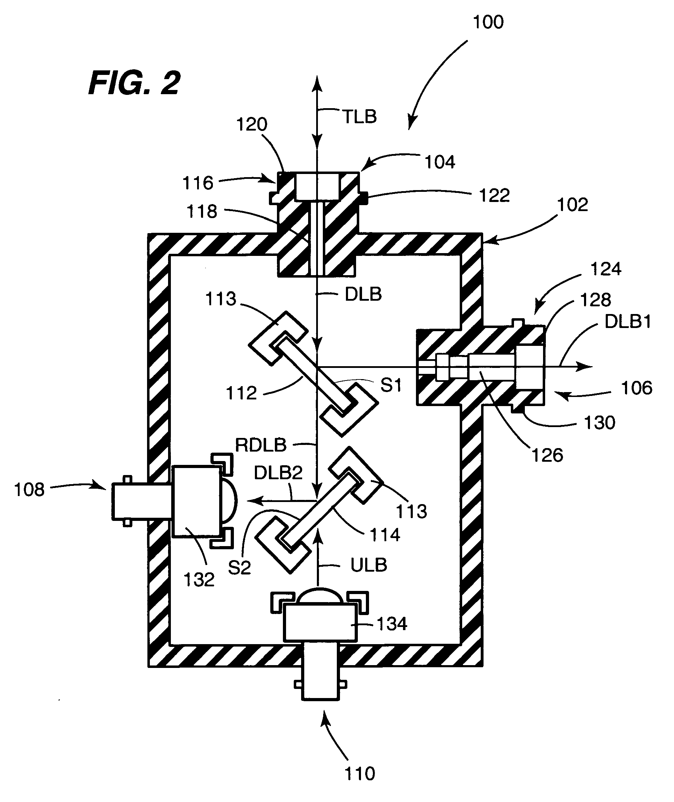

FIGS. 1 and 2 depict a multi-port optical block assembly 100 in accordance with a first embodiment of the inventive disclosures made herein. The multi-port optical block assembly 100 is configured for facilitating bi-directional triplexing functionality. The multi-port optical block assembly 100 includes a body 102, an optical input-output port 104, a filtered light beam access port 106, a resident optical-to-electrical converter port 108, an optical transmitter port 110, a first dichroic mirror 112 and a second dichroic mirror 114. The input-output port 104, the filtered light beam access port 106, the resident optical-to-electrical converter port 108, and the optical transmitter port 110 are integral with respective walls of the body 102. The first dichroic mirror 114 and the second dichroic mirror 112 are fixedly mounted on the body 102 (e.g., held in position by guides 113 of the body 102).

The optical input-output port 104 includes a fiber optics connector attachment structure 116 having a light passage 118 extending therethrough. The light passage 118 enables a triplexed light beam TLB (i.e., a bi-directional light beam comprised of three wavelength specifications) to be transmitted through the body 102 at a position of the optical input-output port 104. The fiber optics connector attachment structure 116 includes a receptacle 120 and engagement members 122, which are jointly configured for enabling a mating connector to be selectively attached to and detached from the receptacle 120. For example, the connector slides onto the receptacle 120 and the engagement members 122 engages respective features (e.g., slots) of the connector. In this manner, the fiber optics connector attachment structure 116 of the optical input-output port 104 is configured for having a mating connector selectively attached thereto and detached therefrom.

The filtered light beam access port 106 includes a fiber optics connector attachment structure 124 having a light passage 126 extending therethrough. The light passage 126 enables a first filtered light beam DLB1 to be transmitted through the body 102 at a position of the filtered light beam access port 106. The fiber optics connector attachment structure 124 includes a receptacle 128 and engagement members 130, which are jointly configured for enabling a mating connector to be selectively attached to and detached from the receptacle 128. In this manner, the fiber optics connector attachment structure 124 of the filtered light beam access port 106 is configured for having a mating connector selectively attached thereto and detached therefrom.

The dichroic mirrors (112, 114) serve to filter and direct various beams of light for enabling the multi-port optical block assembly 100 to facilitate bi-directional triplexing functionality. A downstream light beam DLB, which includes light of at least two different wavelength specifications, is delivered to the multi-port optical block assembly 100 through a fiber optic cable (not shown). The fiber optical cable is connected to the multi-port optical block assembly 100 at the optical input-output port 104.

The first dichroic mirror 112 filters downstream light of a first wavelength specification (i.e., first filtered light DLB1) from the downstream light beam DLB by reflecting the first filtered light DLB1 into the light passage 126 of the filtered light beam access port 106 and allowing a residual portion of the downstream light beam DLB (i.e., residual downstream light beam RDLB), which has one or more residual wavelengths, to pass through a surface S1 of the first dichroic mirror 112. The second dichroic mirror 114 filters light of a second wavelength specification (i.e., second filtered light DLB2) from the residual downstream light beam RDLB by reflecting the second filtered light DLB2 toward the downstream data port 108 and allowing other light components of the residual downstream light beam RDLB, if any, to pass through a surface S2 of the second dichroic mirror 114. In this manner, the dichroic mirrors (112, 114) are also referred to as filters. Accordingly, the first dichroic mirror 112 is a means for filtering a first beam of light (i.e., the downstream light beam light DLB) to provide a second beam of light having a prescribed wavelength characteristic (i.e., the first filtered light DLB1), and a means for directing this second beam of light into the light passage 126 of the fiber optics connector attachment structure 124 of the filtered light access port 106.

An advantage of the multi-port optical block assembly 100 is that the first filtered light DLB1 is externally accessible (i.e., relative to an interior portion of the multi-port optical block assembly 100) at the filtered light access port 106. The filtered light access port 106 allows the first filtered light DLB1 to be received and processed by an optical signal processing apparatus (not specifically shown in FIGS. 1 and 2) that is attached to the filtered light access port 106. Examples of such an optical signal processing apparatus include, but are not limited to, an optical-to-electrical converter apparatus, a passive device such as a filter, an optical signal amplifier apparatus and a one-way or two-way transceiver module

The resident optical-to-electronics converter port 108 and the optical transmitter port 110 are configured and/or functional in accordance with conventional construction and/or functionality of a multi-port optical block assembly. For example, the resident optical-to-electronics converter port 108 includes an optical-to-electrical converter 132 that is configured for converting a signal carried by the second filtered light DLB2 and the optical transmitter port 110 includes a laser diode 134 that outputs light of a third wavelength specification (i.e., the upstream light beam ULB). The dichroic mirrors (112, 114) are substantially transparent to the upstream light beam ULB, thereby allowing the upstream light beam ULB to pass through the dichroic mirrors (112, 114) in a minimum loss manner. The upstream light beam ULB and the downstream light beam DLB are comprised by the triplexed light beam TLB.

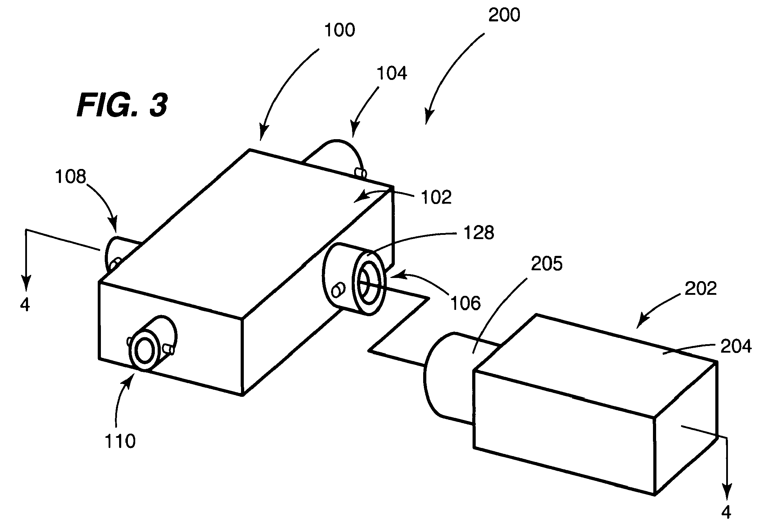

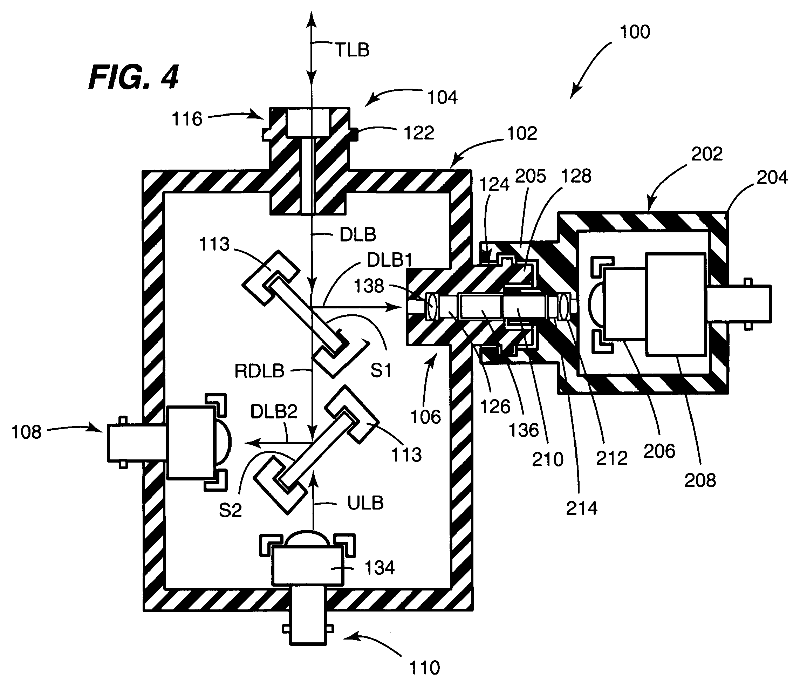

FIGS. 3 and 4 depict a multi-port optical block system 200 in accordance with the first embodiment of the inventive disclosures made herein. The multi-port optical block system 200 depicted in FIGS. 3 and 4 includes the multi-port optical block assembly 100, which is also depicted in FIGS. 1 and 2, and an optical-to-electrical conversion apparatus 202. The optical-to-electrical conversion apparatus 202 is selectively connectable to the receptacle 128 of the filtered light access port 106 and is an example of an optical signal processing apparatus configured for converting the first filtered light DLB1 to a corresponding electrical signal.

The optical-to-electrical conversion apparatus 202 includes a body 204, which includes a connector 205. The connector 205 of the optical-to-electrical conversion apparatus 202 and receptacle 128 of the multi-port optical block assembly 100 are jointly configured for enabling selective attachment and detachment of these two components. Thus, the multi-port optical block assembly 100 and the optical-to-electrical conversion apparatus 202 are selectively attachable and detachable from each other.

Advantageously, the selective connectivity of the optical-to-electrical conversion apparatus 202 allows for different versions of the optical-to-electrical conversion apparatus 202 to be utilized in conjunction with the multi-port optical block assembly 100. In this manner, the multi-port optical block assembly 100 is a universal multi-port optical block assembly with respect to a plurality of different versions of the optical-to-electrical conversion apparatus 202. In one embodiment, for example, a PIN photo diode 206 and back-end electronics 208 of the optical-to-electrical converter apparatus 200, which are mounted within an interior cavity of the body 204 of the optical-to-electrical converter apparatus 200, may now be implemented in a manner that is customizable for specific applications and/or bandwidth specifications and in a manner that is relatively cost-effective and convenient. Through such customization, the bandwidth of the filtered light access port 106 is now given by the input signal at the optical input-output port 104 (e.g., several dozens of GHz) and the multi-port optical block assembly 100 is now configurable for use in many present and future applications. Additionally, the optical-to-electrical conversion apparatus 202 is hot swappable, eliminating the need to take the entire multi-port optical block assembly 100 out of service to change the configuration of the signal processing components of the optical-to-electrical conversion apparatus 202 (e.g., the PIN photo diode 206 and back-end electronics 208).

The multi-port optical block system 200 preferably, but not necessarily, includes a means for enhancing the transmission of the first filtered light DLB1 at the interface between the multi-port optical block assembly 100 and the optical-to-electrical conversion apparatus 202. As depicted in FIG. 4, one embodiment of such a means for enhancing the transmission of the first filtered light DLB1 includes a first optical fiber ferrule 136 and a first lens 138, which is mounted on the body 102 of the multi-port optical block assembly 100, and a second optical fiber ferrule 210 and a second lens 212, which is mounted on the body 204 of the optical-to-electrical conversion apparatus 202. The first optical fiber ferrule 136 is mounted in the light passage 126 of filtered light access port 106 and the first lens 138 is mounted in a respective structure of the body 102 of the multi-port optical block assembly 100. Similarly, the second optical fiber ferrule 210 is mounted in a light passage 214 of body 204 of the optical-to-electrical conversion apparatus 202 and the second lens 212 is mounted in a respective structure of the body 204 of the optical-to-electrical conversion apparatus 202. It is disclosed herein that lens 212 could be integral with PIN photo diode 206.

The ferrules (136, 210) include respective lengths of optical fiber disposed therein. The first lens 138 directs the first filtered light DLB1 into the optical fiber of the first ferrule 136. The second lens 212 directs the first filtered light DLB1 into the PIN photo diode 206 (i.e., a light-receiving portion) of the optical-to-electrical conversion apparatus 202. Examples of the first lens 136 and the second lens 212 include, but are not limited to, a collimating lens, a spherical lens and the like. Through use of the lens 138 and conventional techniques of polishing the faces of the optical fibers/ferrules and providing interface engagement of the ferrules (136, 210) when the connector 205 of the optical-to-electrical conversion apparatus 202 is attached to the receptacle 128 of the multi-port optical block assembly 100, a relatively low loss interconnection may be provided between the multi-port optical block assembly 100 and the optical-to-electrical conversion apparatus 202. Alternately, a light-expanding rod may be implemented in place of the ferrules (136, 210), thereby making the interconnection relatively insensitive to misalignment and dust while avoiding the considerable pressure and mechanical complexity associated with contact connectors such as the ferrules (136, 210).

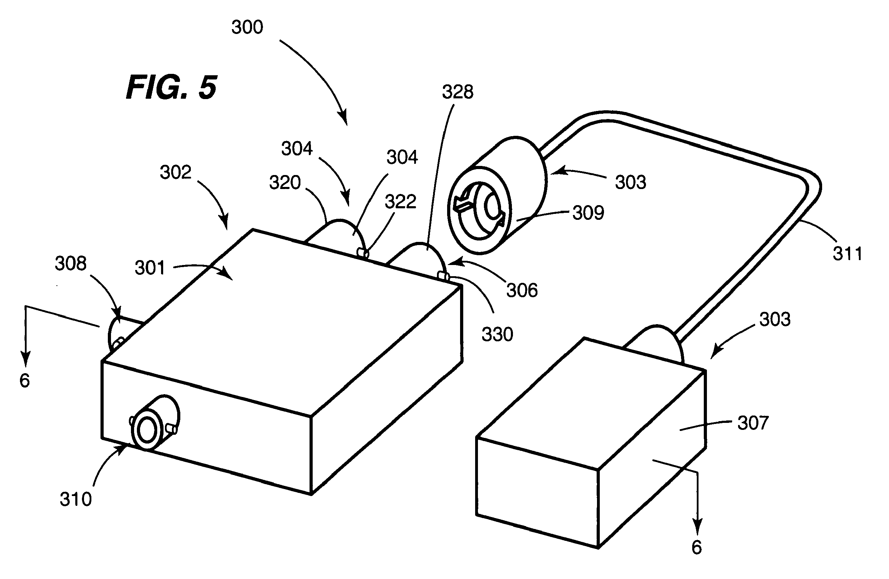

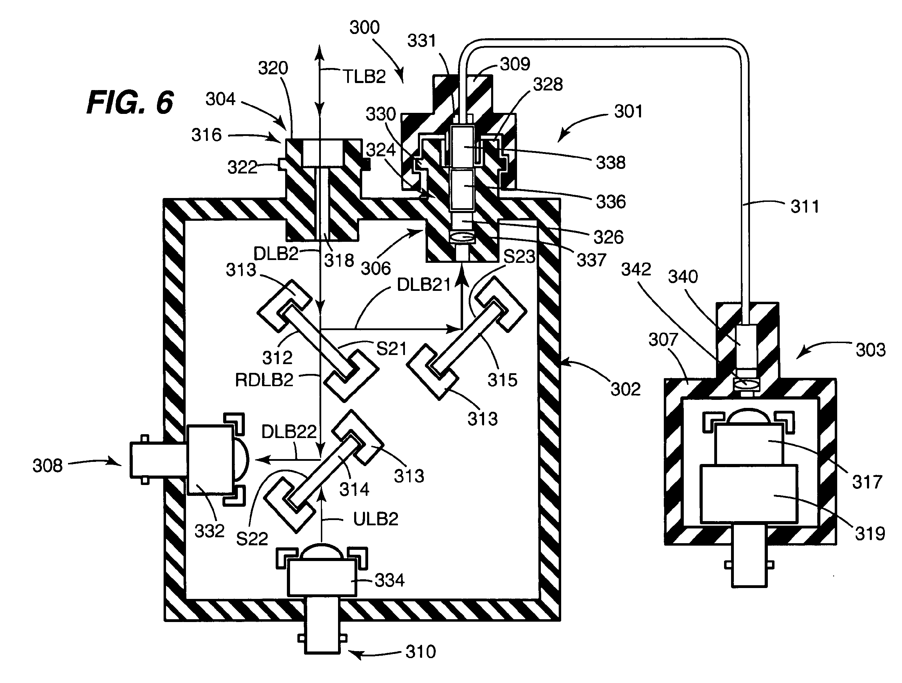

FIGS. 5 and 6 depict a multi-port optical block system 300 in accordance with a second embodiment of the inventive disclosures made herein. The multi-port optical block system 300 depicted in FIGS. 5 and 6 includes a multi-port optical block assembly 301 and an optical-to-electrical conversion apparatus 303. From an overall end-use standpoint, the multi-port optical block assembly 301 and the optical-to-electrical conversion apparatus 303 provide the same respective functionality as the multi-port optical block assembly 100 (depicted in FIGS. 1-4) and the optical-to-electrical conversion apparatus 202 (depicted in FIGS. 3 and 4). However, as will be made clear from the ensuing description of the multi-port optical block system 300, there are advantageous and/or distinctive aspects of the multi-port optical block system 300 from construction and capability standpoints relative to the multi-port optical block system 200.

The multi-port optical block assembly 301 is configured for facilitating bi-directional triplexing functionality. The multi-port optical block assembly 301 includes a body 302, an optical input-output port 304, a filtered light beam access port 306, a resident optical-to-electrical converter port 308, an optical transmitter port 310, a first dichroic mirror 312, a second dichroic mirror 314 and a non-dichroic mirror 315. The input-output port 304, the filtered light beam access port 306, the resident optical-to-electrical converter port 308, and the optical transmitter port 310 are integral with respective walls of the body 302. The first dichroic mirror 312, the second dichroic mirror 314 and the non-dichroic mirror 315 are fixedly mounted on the body 302 (e.g., held in position by guides 313 of the body 302).

The optical input-output port 304 includes a fiber optics connector attachment structure 316 having a light passage 318 extending therethrough. The light passage 318 enables a triplexed light beam TLB2 (i.e., a bi-directional light beam comprised of three wavelength specifications) to be transmitted through the body 302 at a position of the optical input-output port 304. The fiber optics connector attachment structure 316 includes a receptacle 320 and engagement members 322, which are jointly configured for enabling a mating connector to be selectively attached to and detached from the receptacle 320. In this manner, the fiber optics connector attachment structure 316 of the optical input-output port 304 is configured for having a mating connector selectively attached thereto and detached therefrom.

The filtered light beam access port 306 includes a fiber optics connector attachment structure 324 having a light passage 326 extending therethrough. The light passage 326 enables a first filtered light beam DLB21 to be transmitted through the body 302 at a position of the filtered light beam access port 306. The fiber optics connector attachment structure 324 includes a receptacle 328 and engagement members 330, which are jointly configured for enabling a mating connector to be selectively attached to and detached from the receptacle 328. In this manner, the fiber optics connector attachment structure 324 of the filtered light beam access port 306 is configured for having a mating connector selectively attached thereto and detached therefrom.

The dichroic mirrors (312, 314) serve to filter and, in combination with the non-dichroic mirror 315, to direct various beams of light for enabling the multi-port optical block assembly 300 to facilitate bi-directional triplexing functionality. A downstream light beam DLB2, which includes light of at least two different wavelength specifications, is delivered to the multi-port optical block assembly 300 through a fiber optic cable (not shown). The fiber optical cable is connected to the multi-port optical block assembly 302 at the optical input-output port 304.

The first dichroic mirror 312 filters downstream light of a first wavelength specification (i.e., first filtered light DLB21) from the downstream light beam DLB2 by reflecting the first filtered light DLB21 for impingement upon the non-dichroic mirror 315 and allowing a residual portion of the downstream light beam DLB2 (i.e., residual downstream light beam RDLB2), which has one or more residual wavelengths, to pass through a reflecting surface S21 of the first dichroic mirror 312. The first filtered light DLB21 impinges upon a surface S23 of the non-dichroic mirror 315 and is reflected into the light passage 326 of the filtered light access port 306. The second dichroic mirror 314 filters light of a second wavelength specification (i.e., second filtered light DLB22) from the residual downstream light beam RDLB2 by reflecting the second filtered light DLB22 toward the downstream data port 308 and allowing other light components of the residual downstream light beam RDLB2, if any, to pass through a surface S22 of the second dichroic mirror 314. In this manner, the dichroic mirrors (312, 314) are also referred to as filters. Accordingly, the first dichroic mirror 312 is a means for filtering a first beam of light (i.e., the downstream light beam light DLB2) to provide a second beam of light having a prescribed wavelength characteristic (i.e., the first filtered light DLB21) and, in combination with the non-dichroic mirror 315, is a means for directing the second beam of light into the light passage 326 of the fiber optics connector attachment structure 324 of the filtered light access port 306.

An advantage of the multi-port optical block assembly 300 is that the first filtered light DLB21 is externally accessible (i.e., relative to an interior portion of the multi-port optical block assembly 300) at the filtered light access port 306. The filtered light access port 306 allows the first filtered light DLB21 to be received and processed by the optical signal processing apparatus 303 that is attached to the filtered light access port 306. Examples of such an optical signal processing apparatus include, but are not limited to, an optical-to-electrical converter apparatus, a passive device such as a filter, an optical signal amplifier apparatus and a one-way or two-way transceiver module

The resident optical-to-electronics converter port 308 and the optical transmitter port 310 are configured and/or functional in accordance with conventional construction and/or functionality of a multi-port optical block assembly. For example, the resident optical-to-electronics converter port 308 includes an optical-to-electrical converter 332 that is configured for converting a signal carried by the second filtered light DLB22 and the optical transmitter port 310 includes a laser diode 334 that outputs light of a third wavelength specification (i.e., the upstream light beam ULB2). The dichroic mirrors (312, 314) are substantially transparent to the upstream light beam ULB2, thereby allowing the upstream light beam ULB2 to pass through the dichroic mirrors (312, 314) in a minimum loss manner. The upstream light beam ULB2 and the downstream light beam DLB2 are comprised by the triplexed light beam TLB2.

The optical-to-electrical conversion apparatus 303 is selectively connectable to the receptacle 328 of the filtered light access port 306 and is an example of an optical signal processing apparatus configured for converting the first filtered light DLB21 to a corresponding electrical signal. The optical-to-electrical conversion apparatus 303 includes a body 307 having signal processing components contained therein, a connector 309 and a fiber optic cable 311. The connector 309 of the optical-to-electrical conversion apparatus 303 and receptacle 328 of the multi-port optical block assembly 301 are jointly configured for enabling selective attachment and detachment of these two components. Thus, the multi-port optical block assembly 301 and the optical-to-electrical conversion apparatus 303 are selectively attachable and detachable from each other.

Advantageously, the selective connectivity of the optical-to-electrical conversion apparatus 303 allows for different versions of the optical-to-electrical conversion apparatus 303 to be utilized in conjunction with the multi-port optical block assembly 301. In this manner, the multi-port optical block assembly 301 is a universal multi-port optical block assembly with respect to a plurality of different versions of the optical-to-electrical conversion apparatus 303. In one embodiment, for example, a PIN photo diode 317 and back-end electronics 319 of the optical-to-electrical converter apparatus 301, which are mounted within an interior cavity of the body 307 of the optical-to-electrical converter apparatus 303, may now be implemented in a manner that is customizable for specific applications and/or bandwidth specifications and in a manner that is relatively cost-effective and convenient. Through such customization, the bandwidth of the filtered light access port 306 is now given by the input signal at the optical input-output port 304 (e.g., several dozens of GHz) and the multi-port optical block assembly 301 is now configurable for use in many present and future applications.

The multi-port optical block system 300 preferably, but not necessarily, includes a means for enhancing the transmission of the first filtered light DLB21 at the interface between the multi-port optical block assembly 301 and the optical-to-electrical conversion apparatus 303. As depicted in FIG. 6, one embodiment of such a means for enhancing the transmission of the first filtered light DLB21 includes a first optical fiber ferrule 336 and a first lens 337, which is mounted on the body 302 of the multi-port optical block assembly 301, and a second optical fiber ferrule 338, which is mounted on the connector 309 of the optical-to-electrical conversion apparatus 303. The first optical fiber ferrule 336 is mounted in the light passage 326 of filtered light access port 306 and the first lens 337 is mounted in a respective structure of the body 302 of the multi-port optical block assembly 301. Similarly, the second optical fiber ferrule 338 is mounted in a light passage 331 of the connector 309 of the optical-to-electrical conversion apparatus 303.

The first ferrule 336 include a lengths of optical fiber disposed therein and the second ferrule 338 has an optical fiber of the fiber optic cable 311 disposed therein. The first lens 337 directs the first filtered light DLB21 into the optical fiber of the first ferrule 336. Through use of the first lens 337 and conventional techniques of polishing the faces of the optical fibers/ferrules and providing interface engagement of the ferrules (336, 338) when the connector 309 of the optical-to-electrical conversion apparatus 303 is attached to the receptacle 328 of the multi-port optical block assembly 301, a relatively low loss interconnection may be provided between the multi-port optical block assembly 301 and the optical-to-electrical conversion apparatus 303. Alternately, a light-expanding rod may be implemented in place of the ferrules (336, 338), thereby making the interconnection relatively insensitive to misalignment and dust while avoiding the considerable pressure and mechanical complexity associated with contact connectors such as the ferrules (336, 338).

A third ferrule 340 and a second lens 342 are appropriately configured for directing the first filtered light DLB21 into the PIN photo diode 317 (i.e., a light-receiving portion) of the optical-to-electrical conversion apparatus 303. Examples of the first lens 337 and the second lens 342 include, but are not limited to, a collimating lens, a spherical lens and the like.

Advantageously, the connector 309 of the optical-to-electrical converter apparatus 303 is optically connected to the signal processing components (e.g., the a PIN photo diode 317 and back-end electronics 319) of the optical-to-electrical converter apparatus 303 by the fiber optic cable 311. In this manner, body 307 and associated signal processing components may be remotely located relative to the multi-port optical block assembly 301. Although not specifically shown, it is disclosed herein that the body 307 of the optical-to-electrical converter apparatus 303 and associated signal processing components housed therein may be selectively attachable to and detachable from the fiber optic cable 311, such as via a connector arrangement as used to connect the fiber optic cable 311 to the multi-port optical block assembly 301. In this manner, the body 307 of the optical-to-electrical converter apparatus 303 and associated signal processing components housed therein may be readily and selectively swapped (e.g., hot swappable) in situations where a remote location of the body 307 of the optical-to-electrical converter apparatus 303 and associated signal processing components housed therein is more accessible than the multi-port optical block assembly 301.

The following features, separately or in any combination, may also constitute advantageous embodiments of the described or claimed invention:
- A body for a multi-port optical block, assembly, comprising: a plurality of fiber optics connector attachment structures, wherein each one of said fiber optics connector attachment structures is attached to a respective body wall, is configured for having a connector of an optical signal processing apparatus attached thereto, and has a respective light passage for enabling a light beam to be transmitted therethrough;
- The described and/or claimed body wherein: each one of said the fiber optics connector attachment structures includes a respective receptacle extending from a respective exterior body surface; and the respective light passage of each one of said fiber optics connector attachment structures extends through the respective receptacle;
- The described and/or claimed body wherein the respective light passage of at least one of said fiber optics connector attachment structures includes a portion having a bore configured for receiving one of an optical fiber ferrule and a light-expanding rod;
- The described and/or claimed body wherein at least one of said fiber optics connector attachment structures includes means for enabling a fiber optics connector to be selectively attached to and detached from said structure;
- A multi-port optical block assembly, comprising: a body including a fiber optics connector attachment structure configured for having a connector of an optical signal processing apparatus attached thereto and a light passage extending through the fiber optics connector attachment structure; and means for filtering a first beam of light to provide a second beam of light having a prescribed wavelength characteristic; and means for directing the second beam of light into the light passage that extends through the fiber optics connector attachment structure;
- The described and/or claimed multi-port optical block assembly, further comprising: at least one of a optical fiber ferrule and a light-expanding rod mounted within the light passage that extends through the fiber optics connector attachment structure;
- The described and/or claimed multi-port optical block assembly, further comprising: a lens mounted between said means for directing and the light passage, whereby the lens is configured for collimating the second beam of light;
- The described and/or claimed multi-port optical block assembly wherein said means for filtering and said means for directing are jointly comprised by a dichroic mirror, whereby the second beam of light is directed by the dichroic mirror into the light passage;
- The described and/or claimed multi-port optical block assembly wherein: said means for filtering is comprised by a dichroic mirror; and said means for directing is jointly comprised by the dichroic mirror and a non-dichroic mirror whereby the second beam of light is directed by the dichroic mirror to the non-dichroic mirror and by the non-dichroic mirror into the light passage;
- The described and/or claimed multi-port optical block assembly, further comprising: at least one of a optical fiber ferrule and a light expanding rod mounted within the light passage beam that extends through the fiber optics connector attachment structure; and a lens mounted between said means for directing and the light passage, whereby the lens is configured for collimating the second beam of light; wherein said means for filtering and said means for directing are jointly comprised by a dichroic mirror, whereby the second beam of light is directed by the dichroic mirror into the light passage.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice embodiments of the inventive disclosures made herein. It is to be understood that other suitable embodiments may be utilized and that logical, mechanical, chemical and electrical changes may be made without departing from the spirit or scope of such inventive disclosures. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A multi-port optical block system, comprising:
a multi-port optical block assembly configured for having a connector of an optical-to-electrical converter apparatus attached thereto; and
an optical-to-electrical conversion apparatus including a connector configured for being selectively attached to and detached from the multi-port optical block assembly.

2. The multi-port optical block system of claim 1 wherein:
the optical-to-electrical conversion apparatus includes a photo diode and signal amplification electronics connected to the photo diode; and
the photo diode is mounted on the connector of the optical-to-electrical conversion apparatus.

3. The multi-port optical block system of claim 1 wherein the photo diode and said signal amplification electronics are jointly configured for providing optimized signal performance for a prescribed bandwidth specification.

4. The multi-port optical block system of claim 1 wherein the optical-to-electrical conversion apparatus includes a lens mounted on the connector and configured for focusing light into a light-receiving portion of the photo diode.

5. The multi-port optical block system of claim 1 wherein:
the optical-to-electrical conversion apparatus includes a photo diode and signal amplification electronics connected to the photo diode;
the photo diode is mounted on the connector of the optical-to-electrical conversion apparatus;
the photo diode and said signal amplification electronics are jointly configured for providing optimized signal performance for a prescribed bandwidth specification; and
the optical-to-electrical conversion apparatus includes a lens mounted on the connector and configured for focusing light into a light-receiving portion of the photo diode.

6. The multi-port optical block system of claim 1 wherein the multi-port optical block assembly includes:
a body including a fiber optics connector attachment structure configured for having the connector of the optical-to-electrical converter apparatus attached thereto and a light passage extending through the fiber optics connector attachment structure;
means for filtering a first beam of light to provide a second beam of light having a prescribed wavelength characteristic; and
means for directing the second beam of light into the light passage that extends through the fiber optics connector attachment structure.

7. The multi-port optical block system of claim 6 wherein the multi-port optical block assembly includes at least one of an optical fiber ferrule and a light expanding rod mounted within the light passage that extends through the fiber optics connector attachment structure.

8. The multi-port optical block system of claim 7 wherein the multi-port optical block assembly includes a lens mounted between said means for directing and the light passage, whereby the lens is configured for collimating the second beam of light.

9. The multi-port optical block system of claim 8 wherein said means for filtering and said means for directing are jointly comprised by a dichroic mirror, whereby the second beam of light is directed by the dichroic mirror into the light passage.

10. The multi-port optical block system of claim 10 of wherein:
said means for filtering is comprised by a dichroic mirror; and
said means for directing is jointly comprised by the dichroic mirror and a non-dichroic mirror whereby the second beam of light is directed by the dichroic mirror to the non-dichroic mirror and by the non-dichroic mirror into the light passage.
